# EUROPÄISCHE PATENTANMELDUNG

(11) **EP 1 566 152 A1**
(43) Veröffentlichungstag der Anmeldung: **24.08.2005**
(21) Anmeldenummer: 05003221.8
(22) Anmeldetag: 16.02.2005
(51) Int. Cl.: A61C 8/00

(54) **Mit Zirkondioxid beschichtetes Dentalimplantat**

(30) Priorität: 21.02.2004 DE 102004008608
(71) Anmelder: Hartmann, Hans-Jürgen, Dr., 82327 Tutzing (DE)
(72) Erfinder: Hartmann, Hans-Jürgen, Dr., 82327 Tutzing (DE)
(74) Vertreter: Dimmerling, Heinz

(57) **Zusammenfassung**

Ein Dentalimplantat, mit einem Implantatpfosten, welcher einen Grundkörper 1 hat, welcher Mittel 2 zur Befestigung eines Aufbauteils aufweist, ist dadurch gekennzeichnet, dass der Grundkörper 1 außen wenigstens teilweise eine Schicht 3 aus Zirkondioxid aufweist.

## Beschreibung

Die Erfindung betrifft ein Dentalimplantat nach dem Oberbegriff des Anspruchs 1, mit einem Implantatpfosten, welcher einen Grundkörper hat, welcher Mittel zur Befestigung eines Aufbauteils aufweist.

Ein derartiges Dentalimplantat ist beispielsweise aus dem Artikelkatalog "FRIALIT-2-Ästhetisch vollendete Implantatprothetik" der Firma Densply-Friadent, D-68222 Mannheim, bekannt. Bei dem bekannten Dentalimplantat ist der Implantatpfosten vollständig aus medizinischem Reintitan hergestellt. Zwar ist gemäß Angaben des Herstellers die Biokompatibilität von medizinischem Reintitan durch eine mindestens zwanzigjährige Erfahrung belegt, jedoch hat sich herausgestellt, dass die Biokompatibilität von Körpern aus Zirkondioxid besser ist. Man ist daher zunehmend bestrebt, in der Dentaltechnik aus Zirkondioxid gefertigte Teile zu verwenden. Wegen der geringeren mechanischen Stabilität und Präzision von Zirkondioxid als Titan ist es jedoch problematisch, Implantatpfosten aus Zirkondioxid herzustellen.

Es ist Aufgabe der Erfindung, ein eingangs genanntes Dentalimplantat derart auszubilden, dass es bei hoher Stabilität eine verbesserte Biokompatibilität aufweist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Dentalimplantat, mit einem Implantatpfosten, welcher einen Grundkörper hat, welcher Mittel zur Befestigung eines Aufbauteils aufweist, dadurch gekennzeichnet, dass der Grundkörper außen wenigstens teilweise eine Schicht aus Zirkondioxid aufweist.

Dadurch, dass der Grundkörper außen wenigstens teilweise eine Schicht aus Zirkondioxid aufweist, hat der Implantatpfosten eine Biokompatibilität, wie sie Zirkondioxid hat, und eine Stabilität, die im Wesentlichen durch das Material des Grundkörpers bestimmt wird. Verwendet man einen Grundkörper aus Titan, hat der erfindungsgemäße Implantatpfosten im Wesentlichen die Stabilität eines aus Reintitan bestehenden Implantatpfostens, und die Biokompatibilität eines aus Zirkondioxid bestehenden Implantatpfostens. Beim erfindungsgemäßen Implantatpfosten sind die Vorteile eines aus Reintitan bestehenden Implantatpfostens und die Vorteile eines aus Zirkondioxid bestehenden Implantatpfostens miteinander verbunden.

Als sehr vorteilhaft hat es sich herausgestellt, dass die Zirkondioxidschicht auf dem Grundkörper aufgesintert ist. Hierdurch erreicht man eine sehr feste Verbindung der Zirkondioxidschicht mit dem Grundkörper. Darüber hinaus lässt sich ein derart ausgebildeter Implantatpfosten sehr maßgenau herstellen.

Bei einer weiteren besonderen Ausführungsform der Erfindung ist vorgesehen, dass die Zirkondioxidschicht Mittel zur Verankerung in einem Kiefer hat. Dadurch, dass die Zirkondioxidschicht Mittel zur Verankerung in einem Kiefer hat, welche in vorteilhafter Weise als Gewinde ausgebildet sind, lässt sich der Implantatpfosten auf einfache Weise sehr fest im Kiefer verankern. Sehr vorteilhaft ist es, wenn die Zirkondioxidschicht abgestufte Bereiche hat, deren geometrische Abmessungen denen eines Standard-Implantatpfostens wie beispielsweise FRIALIT-2 entsprechen. Hierdurch lässt sich ein Standard-Implantatpfosten problemlos durch einen erfindungsgemäßen Implantatpfosten ersetzen. Im Kiefer sind allenfalls geringe Nacharbeiten vorzunehmen.

Sehr vorteilhaft ist es, wenn der Grundkörper zylinderförmig ausgebildet ist, wie dies bei einer weiteren besonderen Ausführungsform der Erfindung vorgesehen ist. Hierdurch lässt sich der Grundkörper sehr einfach und damit sehr preiswert herstellen. Die äußere Form, insbesondere die durch abgestuften Bereich vorhandenen unterschiedlichen Durchmesser des Implantatpfostens werden durch einen entsprechenden Sinterprozess hergestellt. So kann in einem Bereich des Implantatpfostens mit dem kleinsten Durchmesser eine Zirkondioxidschicht mit einer Dicke von etwa einem halben Millimeter aufgesintert werden, wohingegen im Bereich mit dem größten Durchmesser eine Zirkondioxidschicht mit einer Dicke von mehr als zwei Millimeter aufgesintert werden kann.

Sehr vorteilhaft ist auch eine Ausführungsform der Erfindung, bei der der Grundkörper an seinem dem koronalen Ende abgewandten Ende einen Bereich aufweist, an dem er keine Zirkondioxidschicht aufweist. Da dieser Bereich tief im Kiefer sitzt, ist hier die Biokompatibilität nicht so entscheidend. Dadurch, dass der Grundkörper in diesem Bereich keine Zirkondioxidschicht aufweist, kann der Grundkörper entsprechend massiv gewählt werden, was sich sehr vorteilhaft auf die mechanische Stabilität des Grundkörpers auswirkt.

Sehr vorteilhaft ist es auch, wenn der nicht mit Zirkondioxid beschichtete Bereich Befestigungsmittel aufweist, wie dies bei einer weiteren besonderen Ausführungsform der Erfindung vorgesehen ist. Dies wirkt sich ebenfalls sehr vorteilhaft auf die Verankerung des Implantatpfostens im Kiefer aus.

Bei einer weiteren besonderen Ausführungsform der Erfindung ist vorgesehen, dass die koronale Stirnseite des Implantatpfostens plan ist. In vorteilhafter Weise ist die koronale Stirnseite des Implantatpfostens plan geschliffen. Hierdurch lässt sich auf den Implantatpfosten auf einfache Weise und sehr dicht ein Aufbau aufbringen. Ist die entsprechende Stirnseite des Aufbaus ebenfalls plan geschliffen, wird eine hohe Dichtheit erreicht. Hat der Aufbau ebenfalls einen Grundkörper, dessen Stimfläche mit der Stimfläche des Grundkörpers des erfindungsgemäßen Implantatpfostens korrespondiert, stoßen die beiden Stirnflächen der Grundkörper aufeinander, wodurch der Aufbau sehr fest mit dem Implantatpfosten verbunden werden kann. Hierdurch wird zudem auch neben einer hohen Stabilität eine sehr hohe Dichtheit erreicht.

Der Aufbau kann an seiner Stirnseite auch eine ringförmige Dichtlippe haben, welche auf der Stirnseite des Implantatpfostens fest aufliegt. Dies erhöht ebenfalls die Dichtheit.

Statt dass die koronale Stirnseite des Implantatpfostens plan ausgebildet ist, kann sich die Zirkondioxidschicht am koronalen Ende des Implantatpfostens über den Grundkörper hinaus erstrecken, wie dies bei einer weiteren besonderen Ausführungsform der Erfindung vorgesehen ist. Hierdurch ragt die Zirkondioxidschicht aus dem Kieferknochen heraus. Sie lässt sich daher auf einfache Weise beschleifen, wodurch sie gegebenenfalls noch mit einem zusätzlichen weiteren passgenau aufgesetzten Zirkondioxidaufsatz den individuellen Verhältnissen einer Kronenlänge angepasst werden kann. Der Zirkondioxidaufsatz kann mit dem Implantatpfosten verschraubt werden; er kann statt dessen aber auch auf herkömmliche Weise auf den sich über den Grundkörper hinaus erstreckenden Bereich der Zirkondioxidschicht des Implantatpfostens aufzementiert werden.

Sehr vorteilhaft ist es, wenn der sich über den Grundkörper hinaus erstreckende Teil der Zirkondioxidschicht eine Rille oder Nut aufweist. Hierdurch lässt sich der aufgesetzte Zirkondioxidaufsatz auf einfache Weise positionsgenau auf den über den Grundkörper hinaus erstreckenden Teil der Zirkondioxidschicht aufbringen, wenn der Zirkondioxidaufsatz eine der Rille oder Nut entsprechende Erhebung aufweist. Durch die Erhebung und die Rille oder Nut wird des Weiteren auch eine Verdrehsicherheit des Zirkondioxidaufsatzes erreicht.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine erste Ausführungsform eines erfindungsgemäßen Dentalimplantats und
- Figur 2: eine zweite Ausführungsform eines erfindungsgemäßen Dentalimplantats.

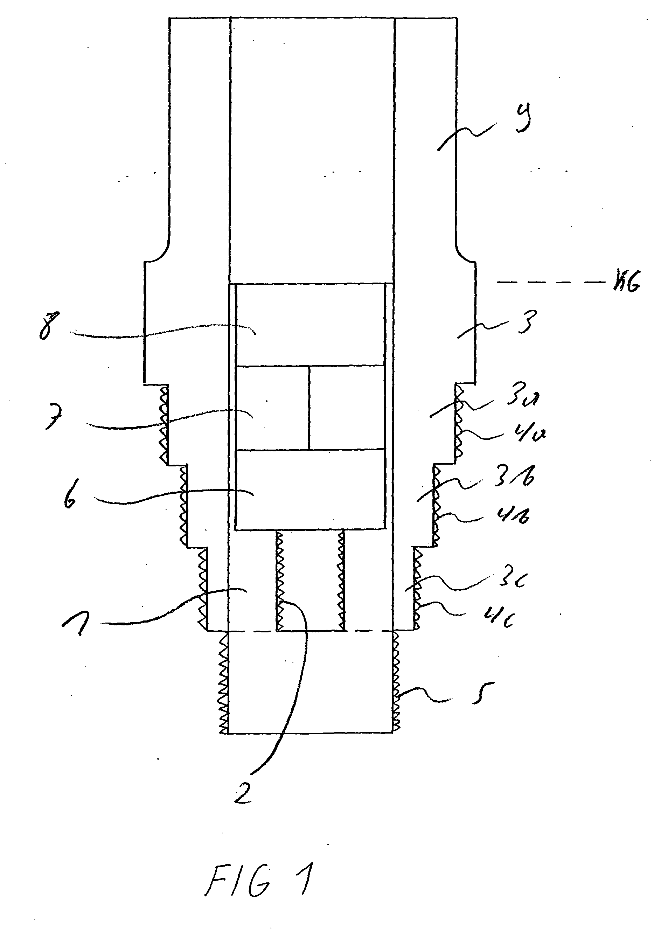

Wie Figur 1 entnommen werden kann, weist ein Dentalimplantat einen Implantatpfosten mit einem aus Titan bestehenden Grundkörper 1 auf, welcher zylinderförmig ausgebildet ist und in axialer Richtung eine Sackbohrung aufweist. Die Sackbohrung hat in ihrem Grund einen Bereich mit einem verringerten Durchmesser, in dem sie auch ein Innengewinde 2 hat. Oberhalb des Bereichs mit dem verringerten Durchmesser ist ein unterer Einschub 6 vorhanden, in dem die Sackbohrung einen Durchmesser hat, der etwa ein bis zwei Millimeter kleiner ist als der Durchmesser des Grundkörpers 1, so dass der Grundkörper 1 in diesen Bereichen nur noch eine Wandstärke hat, der ihm eine genügend große Stabilität verleiht. Oberhalb des unteren runden Einschubs 6 ist ein Bereich 7 vorhanden, welcher im Querschnitt die Form eines Sechskants hat. In diesen Sechskant lässt sich ein Inbusschlüssel einbringen, mittels dem sich der Grundkörper 1 verdrehen lässt. Oberhalb des Sechskantbereichs 7 ist ein oberer runder Einschub 8 vorhanden, der in gleicher Weise wie der erste runde Einschub 6 ausgebildet ist.

An seinem der Sackbohrung gegenüberliegenden Ende ist auf dem Grundkörper 1 ein Außengewinde 5 aufgebracht, mittels dem sich der Grundkörper 1 beispielsweise in einen Kieferknochen einschrauben lässt.

Auf dem Grundkörper 1 ist eine Zirkondioxidschicht 3 aufgebracht, welche Bereiche 3a, 3b, 3c unterschiedlicher Dicke hat. Die Dicke des unteren Bereichs 3c beträgt etwa 0,5 Millimeter. Die Dicke des mittleren Bereichs 3b beträgt etwa einen Millimeter. Die Dicke des oberen Bereichs 3a beträgt etwa 1,5 Millimeter. Die Bereiche 3a, 3b, 3c weisen jeweils ein Außengewinde 4a, 4b, 4c auf.

Durch die unterschiedlichen Dicken der Zirkondioxidschicht 3 erhält der Dentalpfosten die Form einer so genannten Stufenschraube, die dem unter dem Namen FRIALIT-2 bekannten Standard-Implantatpfosten entspricht. Der in Figur 1 dargestellte Implantatpfosten kann somit problemlos in eine für einen Standard-Implantatpfosten vorbereitete Öffnung in einem Kieferknochen eingesetzt werden.

Die Zirkondioxidschicht 3 hat oberhalb der mit den Gewinden 4a, 4b, 4c versehenen Bereichen 3a, 3b, 3c eine Dicke von etwa zwei Millimeter. Der Bereich, an dem die Dicke der Zirkondioxidschicht 3 etwa zweieinhalb Millimeter beträgt, ragt über die mit KG bezeichnete Knochengrenze hinaus.

Der aus dem Knochen herausragende Teil 9 der Zirkondioxidschicht 3 hat einen etwas geringeren Durchmesser als der dickste Durchmesser der Zirkondioxidschicht 3. Der Übergang findet mittels einer Hohlkehle statt, die sich ebenfalls oberhalb der Knochengrenze KG befindet.

Der aus dem Knochen herausstehende Teil 9 der Zirkondioxidschicht 3 hat eine Höhe von etwa sechs Millimeter und lässt sich wie ein Zahnstumpf beschleifen. Hierdurch kann auf den aus dem Knochen herausragende Teil 9 der Zirkondioxidschicht 3 ein zusätzlicher passgenau aufgesetzter Zirkondioxidaufsatz aufgebracht werden.

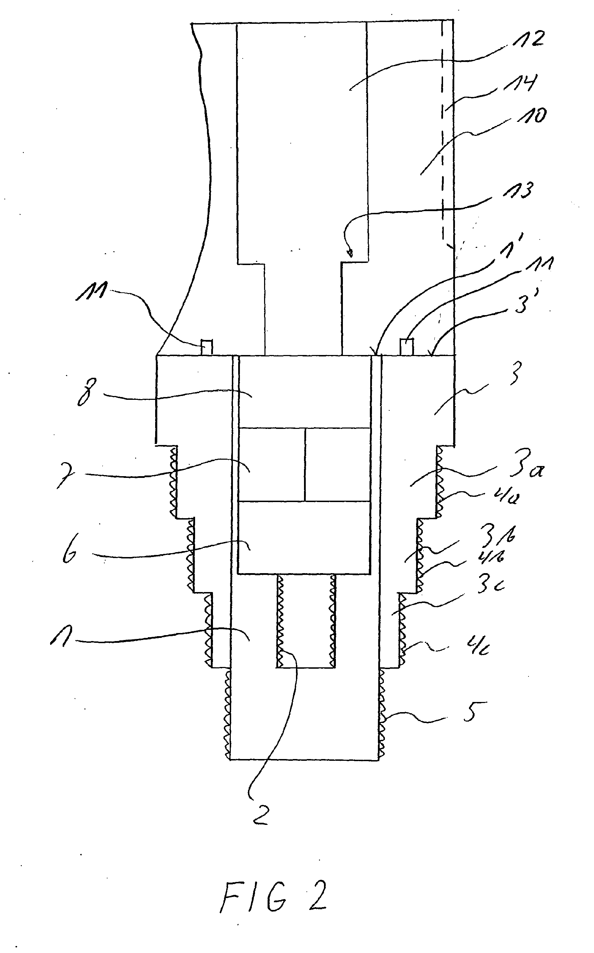

Das in Figur 2 dargestellte Dentalimplantat entspricht im Wesentlichen dem in Figur 1 dargestellten Dentalimplantat. Daher sind gleiche Elemente mit denselben Bezugszeichen versehen.

Im Gegensatz zu dem in Figur 1 dargestellten Dentalimplantat ragt die Zirkondioxidschicht 3 nicht über die Knochengrenze hinaus sondern schließt etwa mit ihr ab. Die sich an der Knochengrenze befindliche Stirnseite 1' des Grundkörpers 1 sowie die Stirnseite 3' der Zirkondioxidschicht 3 sind plangeschliffen. Hierdurch lässt sich auf den Implantatpfosten ein aus Zirkondioxid bestehender Aufbau 10, dessen Stirnseite ebenfalls plangeschliffen ist, mit großer dessen Stirnseite ebenfalls plangeschliffen ist, mit großer Dichtheit aufsetzen. Zur Verbesserung der Dichtheit ist in dem Aufbau 10 eine Ringnut 11 ausgebildet, in der eine Dichtlippe angeordnet ist.

Der Aufbau 10 weist eine Durchgangsbohrung 12 auf, welche an ihrem dem Implantatpfosten zugewandten Ende einen verringerten Durchmesser hat. Durch die hierdurch entstehende Stufe 13 lässt sich der Aufbau 10 mittels einer in das Gewinde 2 eingeschraubten Schraube fest mit dem Implantatpfosten verbinden.

Der Aufbau 10 weist eine sich in axialer Richtung erstreckende Rille 14 auf, wodurch eine auf den Aufbau 10 aufzusetzende Krone auf einfache Weise positionsgenau und verdrehsicher auf den Aufbau 10 aufgebracht werden kann.

## Patentansprüche

1. Dentalimplantat, mit einem Implantatpfosten, welcher einen Grundkörper (1) hat, welcher Mittel (2) zur Befestigung eines Aufbauteils aufweist,
**dadurch gekennzeichnet,**
**dass** der Grundkörper (1) außen wenigstens teilweise eine Schicht (3) aus Zirkondioxid aufweist.

2. Dentalimplantat nach Anspruch 1,
**dadurch gekennzeichnet,**
**dass** die Zirkondioxidschicht (3) auf dem Grundkörper (1) aufgesintert ist.

3. Dentalimplantat nach Anspruch 1 oder 2,
**dadurch gekennzeichnet,**
**dass** die Zirkondioxidschicht (3) Mittel (4a, 4b, 4c) zur Verankerung in einem Kiefer hat.

4. Dentalimplantat nach einem der Ansprüche 1 bis 3,
**dadurch gekennzeichnet,**
**dass** die Zirkondioxidschicht (3) abgestufte Bereiche hat, deren geometrische Abmessungen denen eines Standard-Implantatpfostens entsprechen.

5. Dentalimplantat nach einem der Ansprüche 1 bis 4,
**dadurch gekennzeichnet,**
**dass** der Grundkörper (1) zylinderförmig ausgebildet ist.

6. Dentalimplantat nach einem der Ansprüche 1 bis 5,
**dadurch gekennzeichnet,**
**dass** der Grundkörper (1) an seinem dem koronalen Ende abgewandten Ende einen Bereich (5a) aufweist, an dem er keine Zirkondioxidschicht (3) aufweist.

7. Dentalimplantat nach Anspruch 6,
**dadurch gekennzeichnet,**
**dass** der nicht mit Zirkondioxid beschichtete Bereich (5a) Befestigungsmittel (5b) aufweist.

8. Dentalimplantat nach einem der Ansprüche 1 bis 7,
**dadurch gekennzeichnet,**
**dass** die koronale Stirnseite (1', 3') des Implantatpfostens plan ist.

9. Dentalimplantat nach einem der Ansprüche 1 bis 7,
**dadurch gekennzeichnet,**
**dass** sich die Zirkondioxidschicht (3) am koronalen Ende des Implantatpfostens über den Grundkörper (1) hinaus erstreckt (9).

10. Dentalimplantat nach Anspruch 9,
**dadurch gekennzeichnet,**
**dass** sich der über den Grundkörper (1) hinaus erstreckende Teil (9) der Zirkondioxidschicht (3) eine Rille oder Nut aufweist.
